# EUROPÄISCHE PATENTSCHRIFT

(11) **EP 2 526 002 B1**
(45) Veröffentlichungstag und Bekanntmachung des Hinweises auf die Patenterteilung: **29.07.2015**
(21) Anmeldenummer: 11700628.8
(22) Anmeldetag: 06.01.2011
(51) Int. Cl.: B60T 13/66

(54) **BREMSANORDNUNG EINES SCHIENENFAHRZEUGS**
BRAKE ARRANGEMENT OF A RAILWAY VEHICLE
SYSTÈME DE FREINAGE D'UN VÉHICULE FERROVIAIRE

(30) Priorität: 18.01.2010 DE 102010005091
(43) Veröffentlichungstag der Anmeldung: 28.11.2012
(73) Patentinhaber: Siemens Aktiengesellschaft, 80333 München (DE)
(72) Erfinder: LICHTERFELD, Jens Peter, 91052 Erlangen (DE); WIESAND, Manfred, 90559 Burgthann (DE)
(86) Internationale Anmeldenummer: PCT/EP2011/050128
(87) Internationale Veröffentlichungsnummer: WO 2011/086029

(56) Entgegenhaltungen:
- EP-A2- 0 335 076
- EP-A2- 0 958 980
- DE-A1- 3 408 013
- DE-A1- 19 848 990
- DE-A1- 19 848 994
- DE-A1-102007 031 235
- DE-B3-102008 012 700

## Beschreibung

Die Erfindung betrifft eine Bremsanordnung eines Schienenfahrzeugs mit einer elektrischen Bremseinrichtung mit einer elektronischen Bremssteuerung und mit einem elektropneumatischen Regler, der einen Drucksensor aufweist, einer Notbremseinrichtung mit einem Druckminderer in Reihe mit einer Ventileinrichtungund einer an einen pneumatischen Ausgang der elektrischen Bremseinrichtung und einen pneumatischen Ausgang der Notbremseinrichtung mit ihren Eingängen angeschlossenen Wechselventileinrichtung, die mit ihrem Ausgang mit einer einem Bremszylinder vorgeordneten Steuerventileinrichtung verbunden ist.

Eine derartige Bremsanordnung ist der Beschreibungseinleitung der deutschen Patentschrift DE 10 2006 018 554 B3 entnehmbar. Bei dieser bekannten Bremsanordnung besteht die Ventileinrichtung der Notbremseinrichtung aus einem Bremsventil und einem Löseventil sowie einem Steuerventil, die von einem eigenen elektrischen Bremszuspannkreis und Bremslösekreis elektrisch angesteuert werden. Der Drucksensor des elektropneumatischen Reglers ist mit seinem Druckeingang an den Ausgang der elektrischen Bremseinrichtung angeschlossen und liegt mit seinem Stromausgang an der elektronischen Bremssteuerung.

Weiterhin zeigt die Offenlegungsschrift DE 198 48 994 A1 ein Bremssystem für ein Schienenfahrzeug, bei dem eine elektronische Steuereinheit eine elektropneumatische Drucksteuereinrichtung steuert. Dabei ist eine Notbrems-Sicherheitsleitung mit der elektronischen Steuereinheit und einer Fail-SafeÜberwachungseinheit verbunden. Die Steuereinheit leitet eine Notbremsung ein. Nur wenn die Steuereinheit die Notbremsung nicht korrekt einleitet, wirkt die Fail-SafeÜberwachungseinheit direkt auf ein Umschaltmodul ein und bewirkt ein Umschalten auf eine pneumatische Rückfallebene.

Zur Lösung dieser Aufgabe ist bei einer Bremsanordnung der oben angegebenen Art erfindungsgemäß die Ventileinrichtung ein nach dem Ruhestromprinzip arbeitendes, elektromagnetisches Notbremsventil, und der Drucksensor des elektro-pneumatischen Reglers ist an den Ausgang der Wechselventileinrichtung angeschlossen.

Ein Vorteil der erfindungsgemäßen Bremseinrichtung besteht darin, dass die Ventileinrichtung der Notbremseinrichtung mit einem einzigen Ventil in Form eines nach dem Ruhestromprinzip arbeitenden elektromagnetischen Notbremsventils ausgeführt ist, das somit nur eine Ansteuerung benötigt. Ein weiterer Vorteil wird darin gesehen, dass durch den an den Ausgang der Wechselventileinrichtung angeschlossenen Drucksensor der Vorsteuerdruck an der Steuerventileinrichtung erfasst wird und demzufolge ein entsprechender Strom zur Steuerung der elektronischen Bremssteuerung der erfindungsgemäßen Bremsanordnung eingesetzt werden kann. Dies ermöglicht es, im Falle einer Notbremsung den Notbremsdruck über den am Ausgang der Notbremseinrichtung anstehenden Druck zu erhöhen, indem dann über den elektro-pneumatischen Regler die Wechselventileinrichtung entsprechend höher beaufschlagt wird, so dass der Notbremsdruck erhöht wird.

Bei der erfindungsgemäßen Bremseinrichtung kann die Wechselventileinrichtung in unterschiedlicher Weise ausgebildet sein, beispielsweise aus einem einzigen Wechselventil bestehen, wie es an sich aus der oben genannten Patentschrift als bekannt hervorgeht. Dann stellt die erfindungsgemäße Bremsanordnung eine direkte Bremsanordnung dar.

Ausgehend davon lässt sich im Bedarfsfalle in vorteilhafter Weise eine indirekte Bremsanordnung gewinnen, wenn die Wechselventileinrichtung ein erstes und ein zweites Wechselventil enthält und die Eingänge des ersten Wechselventils die Eingänge der Wechselventileinrichtung bilden und der Ausgang des ersten Wechselventils mit einem Eingang des zweiten Wechselventils verbunden ist; der zweite Eingang des zweiten Wechselventils ist an einen Ausgang eines mit der Hauptluftleitung der Bremsanordnung verbundenen Steuerventils angeschlossen, und der Ausgang des zweiten Wechselventils bildet den Ausgang der Wechselventileinrichtung bildet. Es bedarf somit im Rahmen der Erfindung lediglich eines üblicherweise bei indirekten Bremsanordnungen vorgesehenen Steuerventils und eines weiteren Wechselventils für die Wechselventileinrichtung, um eine indirekte Bremsanordnung zu gewinnen.

Gemäß der Erfindung ist somit gewissermaßen eine Art Bausteinsystem geschaffen, bei dem in einer Grundausführung mit einem einzigen Wechselventil eine direkte Bremsanordnung herstellbar ist und durch Hinzufügen eines zweiten Wechselventils und eines Steuerventils eine indirekte Bremsanordnung schaffbar ist. Dies ist fertigungstechnisch von Vorteil.

Bei der erfindungsgemäßen Bremsanordnung können die Wechselventile in unterschiedlicher Weise ausgebildet sein; als besonders vorteilhaft wird es angesehen, wenn die Wechselventile Doppelrückschlagventile sind, weil diese weit verbreitet und damit kostengünstig sind.

Auch hinsichtlich der Steuerventileinrichtung kann die erfindungsgemäße Bremsanordnung in unterschiedlicher Weise ausgestaltet sein. Bei einer vorteilhaften Ausführungsform ist die Steuerventileinrichtung ein Relaisventil, mit dem der diesem Relais zugeführte kleine Volumenstrom in einen großen Volumenstrom umgesetzt wird, wie er zur Beaufschlagung der Bremszylinder erforderlich ist.

Soll die jeweilige Beladung des Schienenfahrzeugs beim Abbremsen Berücksichtigung finden, dann ist bei der erfindungsgemäßen Bremsanordnung vorteilhafterweise ein zweiter Drucksensor vorgesehen, der mit dem Lastdruck des Schienenfahrzeugs beaufschlagt ist und einen entsprechenden Steuerstrom an die Bremssteuerung abgibt, so dass von dieser dann am Ausgang des elektro-pneumatischen Reglers ein vom Lastdruck abhängiger Druck erzeugt wird, der über das Wechselventil an den Eingang des Relaisventils weitergeleitet und dort in einen entsprechenden Bremsdruck für die Bremszylinder umgesetzt wird.

Gegebenenfalls ist es jedoch auch vorteilhaft, wenn die Steuerventileinrichtung ein Lastbremsrelaisventil ist. In diesem Falle wird von dem Lastbremsrelaisventil selbst der Lastdruck berücksichtigt und ein entsprechender Bremsdruck für die Bremszylinder erzeugt.

Die erfindungsgemäße Bremsanordnung zeichnet sich ferner dadurch aus, dass bei aktivierter Notbremseinrichtung der Bremszylinderdruck durch die elektrische Bremseinrichtung erhöht, nicht jedoch verringert werden kann.

Darüber hinaus ist in vorteilhafter Weise bei einem Differenzdruck in der HL größer als 1,5 bar und der dadurch erzeugte Vorsteuerdruck des Steuerventils durch die elektrische Bremseinrichtung erhöht, nicht jedoch verringert werden kann.

Zur weiteren Erläuterung der Erfindung ist in
- Figur 1: ein Ausführungsbeispiel der erfindungsgemäßen Bremsanordnung als direkte Bremsanordnung mit einem Wechselventil und einem Lastbremsrelaisventil, in
- Figur 2: ein weiteres Ausführungsbeispiel der erfindungsgemäßen Bremsanordnung ebenfalls in Form einer direkten Bremsanordnung mit einem Wechselventil und Relaisventil, in
- Figur 3: ein Ausführungsbeispiel der erfindungsgemäßen Bremsanordnung als indirekte Bremsanordnung mit zwei Wechselventilen und Lastbremsrelaisventil und in
- Figur 4: ein weiteres Ausführungsbeispiel als indirekte Bremsanordnung mit zwei Wechselventilen und einem Relaisventil gezeigt.

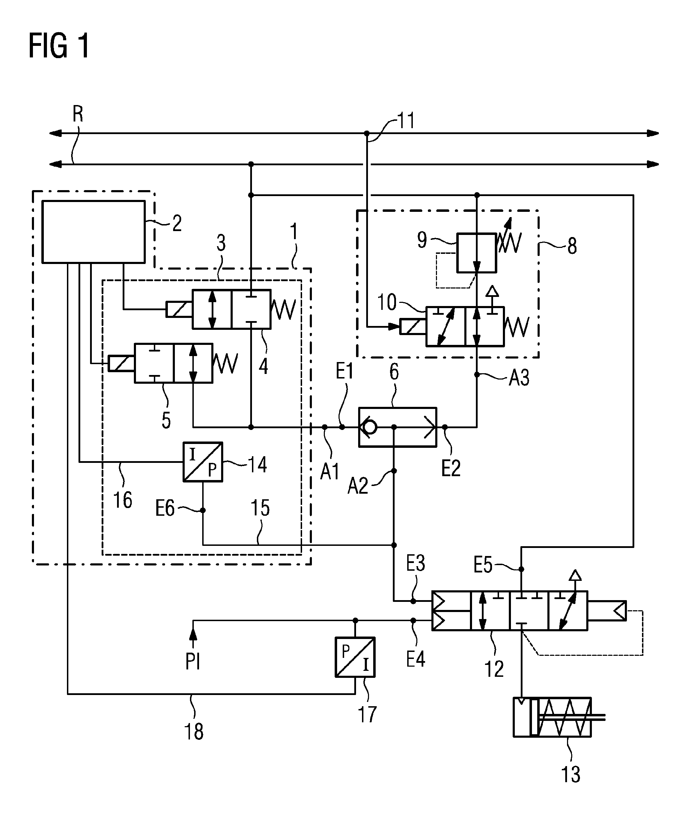

Das Ausführungsbeispiel nach Figur 1 zeigt eine Bremsanordnung eines nicht dargestellten Schienenfahrzeugs mit einer elektrischen Bremseinrichtung 1, die eine elektronische Bremssteuerung 2 enthält. An die Bremssteuerung 2 ist ein elektro-pneumatischer Regler 3 angeschlossen ist. Der elektro-pneumatische Regler 3 weist ein Belüftungsventil 4 und ein Halteventil 5 auf. An einen Ausgang A1 des elektro-pneumatischen Reglers 3 ist ein Eingang E1 einer Wechselventileinrichtung 6 angeschlossen, die in dem dargestellten Ausführungsbeispiel von einem Doppelrückschlagventil gebildet ist.

Ein weiterer Eingang E2 der Wechselventileinrichtung 6 ist über eine Anschlussleitung mit einem pneumatischen Ausgang A3 einer Notbremseinrichtung 8 verbunden. Die Notbremseinrichtung 8 weist einen Druckminderer 9 auf, mit dem in Reihe ein elektromagnetisches Notbremsventil 10 angeordnet ist. Dieses Notbremsventil 10 arbeitet nach dem Ruhestromprinzip, d. h., es wird normalerweise ständig mit Strom beaufschlagt und hält dabei das Notbremsventil geschlossen. Das Notbremsventil 10 ist über einen Notbremsschleifenstromkreis 11 betätigbar. Ein Ausgang A2 der Wechselventileinrichtung 6 ist mit einer Steuerventileinrichtung in Form eines Lastbremsrelaisventils 12 verbunden, und zwar mit dessen einem Eingang E3; ein weiterer Eingang E4 wird mit einem Lastdruck Pl beaufschlagt, so dass in bekannter Weise ein dem Lastbremsrelaisventil 12 nachgeordneter Bremszylinder 13 mit einem lastabhängigen Bremsdruck beaufschlagt werden kann. Über einen weiteren Eingang E5 ist das Lastbremsrelaisventil 12 in üblicher Weise mit dem sogenannten R-Behälter verbunden, d. h. dem Druckluftspeicher, der von der Hauptbehälterluftleitung mit einem Rückschlagventil gesichert ist.

Wie die Figur 1 ferner zeigt, ist ein Drucksensor 14 des elektro-pneumatischen Reglers 3 mit seinem Druckeingang E6 mit dem Ausgang A2 der Wechselventileinrichtung 6 bzw. dem Eingang E3 des Lastbremsrelaisventils 12 verbunden. Über eine Druckleitung 15 wird der Drucksensor 14 somit mit einem Vorsteuerdruck Cv beaufschlagt. Ein entsprechender Strom wird von dem Drucksensor 14 über eine Leitung 16 der Bremssteuerung 2 zugeführt.

Ergänzend ist noch darauf hinzuweisen, dass zu Zwecken der Überwachung und Lasterfassung ein weiterer Drucksensor 17 mit seinem Druckeingang an den Eingang E4 des Lastbremsrelaisventils 12 angeschlossen ist und mit seinem Ausgang über eine Leitung 18 mit der Bremssteuerung 2 verbunden ist.

Die in Figur 1 dargestellte Bremseinrichtung arbeitet in folgender Weise:
Bei einer üblichen Betriebsbremsung ist über den Notbremsschleifenstromkreis 11 das Notbremsventil 10 mit Spannung beaufschlagt und demzufolge angesteuert. Dies bedeutet, dass das Notbremsventil gesperrt ist und somit am Eingang E2 der Wechselventileinrichtung 6 ein Druck von 0 bar ansteht. Wird vom Zugführer ein Bremssollwertsignal erzeugt, ähnlich wie beim Stand der Technik durch einen nicht dargestellten Fahr/Bremsschalter, der durch die Fahrzeugsteuerung ausgewertet wird, dann wird über einen nicht dargestellten Fahrzeugbus ein entsprechender Sollwert für den elektro-pneumatischen Regler 3 an die Bremssteuerung 2 übermittelt. Daraufhin steuert diese mit Hilfe des Halteventils 5 und des Belüftungsventils 4 den Vorsteuerdruck Cv am Eingang E3 des Lastbremsrelaisventils 12. Dabei kann der Druck im Bremszylinder 13 durch das Bestromen des Halteventils 5 und des Belüftungsventils 4 erhöht und durch das Bestromen des Halteventils 5 beibehalten werden; durch Entstromen beider Ventile 4 und 5 wird der Vorsteuerdruck Cv reduziert. Mittels des Drucksensors 14 wird der Vorsteuerdruck Cv erfasst und geregelt. Das Lastbremsrelaisventil 12 setzt anschließend den Vorsteuerdruck Cv unter Berücksichtigung des Lastdruckes Pl in den Druck im Bremszylinder 13 um. Soll die Bremse gelöst werden, werden das Halte- und das Belüftungsventil 4 bzw. 5 nicht mehr bestromt, und es wird damit der Bremszylinder 13 drucklos.

Im Falle einer Notbremsung wird der Notbremsschleifenstromkreis 11 spannungslos, wodurch das Notbremsventil 10 abfällt, und es wird der durch den Druckminderer 9 eingestellte Notbremsdruck durchgelassen; er beaufschlagt am Eingang E2 die Wechselventileinrichtung 6, woraufhin diese den Notbremsdruck an das Lastbremsrelaisventil 12 weiter schaltet.

Zusätzlich wird redundant der Notbremsdruck durch die Bremssteuerung 2 und den elektro-pneumatischen Regler 3 mittels des Drucksensors 14 eingestellt. Dadurch kann ein ggf. eintretender Ausfall des Notbremsventils 10, d. h. das Verharren in der Ansteuerstellung, kompensiert werden. Außerdem besteht die Möglichkeit mit Hilfe des elektro-pneumatischen Reglers 3 ein Übersteuern bewusst vorzunehmen, d. h. einen höheren Bremsdruck als den Notbremsdruck auf den Bremszylinder 13 im Falle einer Notbremsung zu geben.

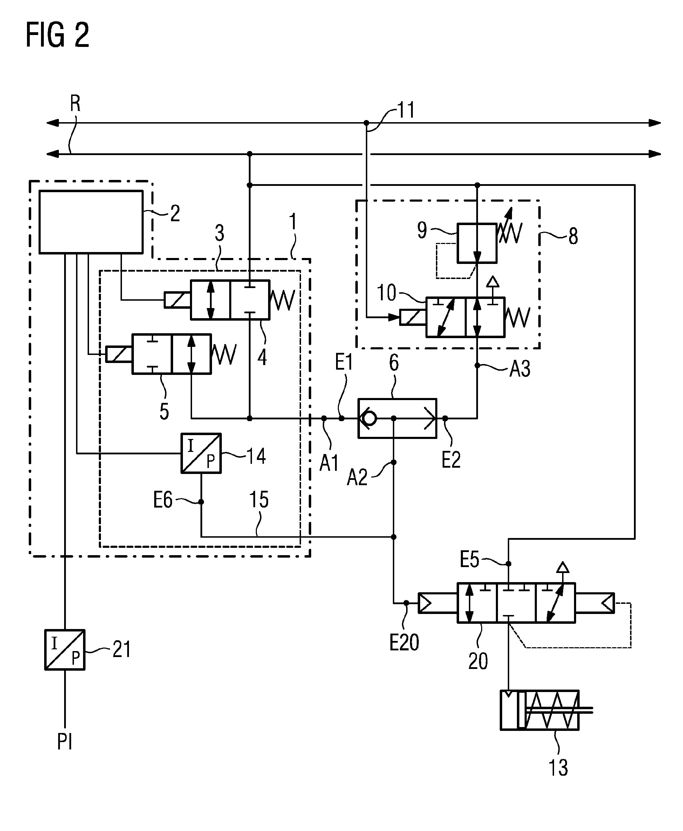

Bei dem Ausführungsbeispiel nach Figur 2 handelt es sich ebenfalls um eine direkte Bremsanordnung. Es sind in der Figur 2 Elemente, die denen nach Figur 1 entsprechen, mit gleichen Bezugszeichen versehen.

Im Unterschied zu dem Ausführungsbeispiel nach Figur 1 ist bei der Bremsanordnung nach Figur 2 für die Steuerventileinrichtung anstelle eines Lastbremsrelaisventils ein Relaisventil 20 verwendet, das mit seinem Eingang E20 mit dem Ausgang A2 der Wechselventileinrichtung 6 verbunden ist. Dem Relaisventil 20 nachgeordnet ist wiederum der Bremszylinder 13. Auch ein Eingang E21 des Relaisventils 20 ist in der gleichen Weise beschaltet, wie es oben im Zusammenhang mit der Beschreibung der Figur 1 bereits erläutert worden ist. Das Relaisventil 20 setzt den ihm zufließenden kleinen von der Wechselventileinrichtung 6 Volumenstrom in einen großen Volumenstrom um, ohne jedoch eine Anpassung an den Lastdruck vorzunehmen. Die Berücksichtigung eines höheren Lastdrucks erfolgt bei diesem Ausführungsbeispiel in der Weise, dass mittels eines zusätzlichen Drucksensors 21 der jeweilige Lastdruck erfasst und der Bremssteuerung 2 ein entsprechender Strom zugeführt wird. Mittels des elektro-pneumatischen Reglers 3 wird ein dem Lastdruck entsprechender Druck auf die Wechselventileinrichtung 6 gegeben, so dass dann das Relaisventil 20 einen an das jeweilige Gewicht des Schienenfahrzeugs angepassten Druck erhält. Dementsprechend wird dann von dem Relaisventil 20 ein ggf. höherer Bremsdruck auf den Bremszylinder 13 gegeben. Dabei ist der Notbremsdruck durch den Druckminderer 9 so eingestellt, dass beispielsweise bei einem leeren Schienenfahrzeug der für die vorgegebene Verzögerung benötigte Bremsdruck erzeugt wird.

Das Ausführungsbeispiel nach der Figur 2 ermöglicht es ferner, im Notbremsfalle bei einem Ausfall des elektro-pneumatischen Reglers 3 oder einer anderen Bremssteuerung des Schienenfahrzeugs diesen Ausfall zu kompensieren, indem der Bremsdruck in einem anderen Bremssteuerpfad erhöht wird.

Die Bremsanordnung nach Figur 2 arbeitet in ähnlicher Weise wie die nach Figur 1. Wird durch den Zugführer ein Bremssollwert erzeugt, dann wird ein Sollwert für den elektro-pneumatischen Regler 3 über beispielsweise den nicht dargestellten Fahrzeugbus an die Bremssteuerung 2 übermittelt. Die Bremssteuerung 2 erfasst durch den zusätzlichen Drucksensor 21 den Lastdruck und berechnet anschließend den für den Sollwert benötigten Druck im Bremszylinder 13. Anschließend steuert die Bremssteuerung 2 mit Hilfe des Halte- und des Belüftungsventils 4 bzw. 5 den Vorsteuerdruck Cv. Dieser Druck wird mittels des Drucksensors 14 erfasst und geregelt. Das Relaisventil 20 setzt anschließend den Vorsteuerdruck Cv in den Bremsdruck für den Bremszylinder 13 um. Es wird ausschließlich eine Anpassung des Volumenstroms durchgeführt. Soll die Bremse gelöst werden, wird das Halte- und das Belüftungsventil 4 bzw. 5 nicht mehr bestromt und damit der Bremszylinder 13 drucklos.

Auch im Falle einer Notbremsung arbeitet die Bremsanordnung nach Figur 2 ähnlich wie die nach Figur 1, allerdings mit dem Unterschied, dass beim Ausfall des Notbremsventils 10 der Notbremsdruck durch die Bremssteuerung 2 und den elektro-pneumatischen Regler 3 eingestellt wird. Es wird hier aber der Lastdruck durch die Bremssteuerung 2 erfasst, und der tatsächlich benötigte Notbremsdruck errechnet. Im Falle einer Beladung des Schienenfahrzeugs wird mit Hilfe des durch die Wechselventileinrichtung 6 überlagerten Druck des elektro-pneumatischen Reglers 3 der Notbremsdruck auf den für die Verzögerung erforderlichen Bremsdruck erhöht, wodurch eine Lastanpassung des Bremsdrucks ermöglicht ist.

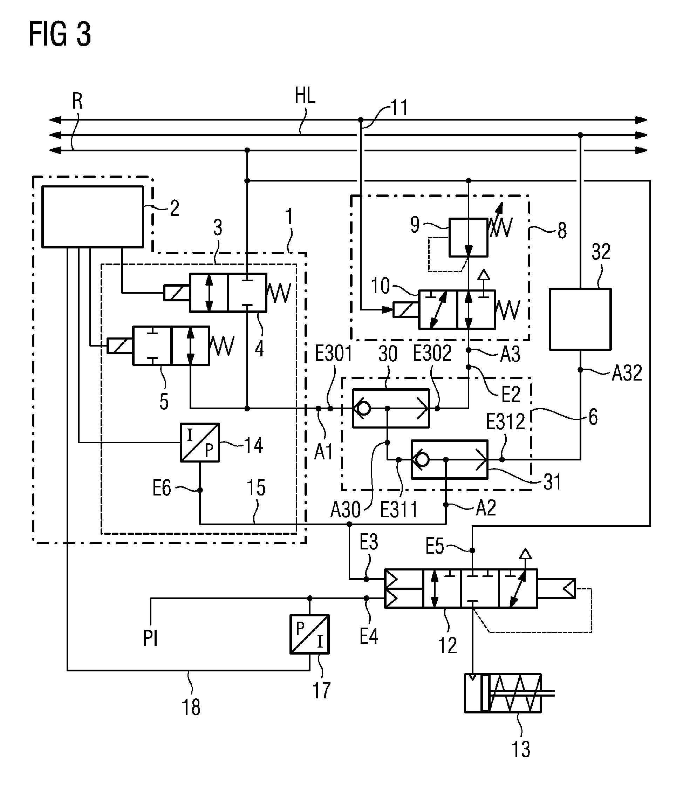

Figur 3 zeigt eine sowohl als direkte als auch indirekte Bremse wirkende Bremsanordnung gemäß der Erfindung. Auch hier sind Teile, die denen nach den Figuren 1 und 2 entsprechen, mit gleichen Bezugszeichen versehen. Ein wesentlicher Unterschied zwischen der Ausführungsform nach Figur 3 und der nach Figur 1 besteht darin, dass hier die Wechselventileinrichtung 6 aus einem ersten Wechselventil 30 und einem zweiten Wechselventil 31 besteht. Das erste Wechselventil 30 ist mit seinem Eingang E301 an den Ausgang A1 des elektro-pneumatischen Reglers 3 und mit seinem zweiten Eingang E302 mit dem Ausgang A3 der Notbremseinrichtung 8 verbunden. Der Ausgang A30 des ersten Wechselventils 30 ist mit einem Eingang E311 des weiteren Wechselventils 31 verbunden, das mit seinem anderen Eingang E312 an den Ausgang A32 eines Steuerventils 32 angeschlossen ist, bei dem es sich um ein Ventil handelt, wie es beispielsweise in den UIC-Merkblättern UC541-01 definiert ist, somit eine sogenannte A-Kammer besitzt, die den maximalen Druck in der Hauptluftleitung HL als Referenzdruck speichert; der Ausgang des zweiten Wechselventils 31 bildet den Ausgang der Wechselventileinrichtung 6. An den Ausgang A2 der Wechselventileinrichtung 6 ist - wie schon im Zusammenhang mit Figur 1 beschrieben - der Drucksensor 14 und das Lastbremsrelaisventil 12 angeschlossen. In einer weiteren Ausführungsform kann der Drucksensor 14 auch am Ausgang A1 des elektro-pneumatischen Reglers oder am Ausgang A30 des Wechselventils 30 angeschlossen sein.

Bei der in Figur 3 dargestellten indirekt wirkenden Bremsanordnung wird der Bremssollwert zusätzlich zu den elektrischen Signalen im Schienenfahrzeug über die Hauptluftleitung HL verteilt. Diese wird im drucklosen Zustand beschrieben, d. h., um eine Bremse zu lösen, muss in der Hauptluftleitung HL der Druck normalerweise 5 Bar betragen. Zum Bremsen wird dieser Druck anschießend abgesenkt und bei einer Druckdifferenz von 1,5 bar muss der maximale Druck im Bremszylinder 13 erreicht werden. Um das Signal in einen Bremsdruck umzusetzen, wird das oben bereits beschriebene Steuerventil 32 verwendet, das in seiner A-Kammer den maximalen Druck in der Hauptluftleitung HL als Referenzdruck speichert. Wird von dem Steuerventil 32 aufgrund eines Bremsvorganges eine Druckdifferenz erkannt, wird am Ausgang A32 des Steuerventils 32 ein Steuerdruck erzeugt. Beträgt die Druckdifferenz mehr als 1,5 bar, werden als Steuerdruck 3,8 Bar erzeugt, welcher sich mittels des zweiten Wechselventils 31 dem vom elektro-pneumatischen Regler 3 erzeugten Druck überlagert und das Lastbremsrelaisventil 12 vorsteuert. Dieses setzt den Steuerdruck in Abhängigkeit des von dem weiteren Drucksensor 17 erfassten Lastdrucks in einen Bremsdruck in dem Bremszylinder 13 um.

Zusätzlich kann hier ein Übersteuern erreicht werden, indem mit Hilfe des elektro-pneumatischen Reglers 3 ein erhöhter Druck erzeugt wird.

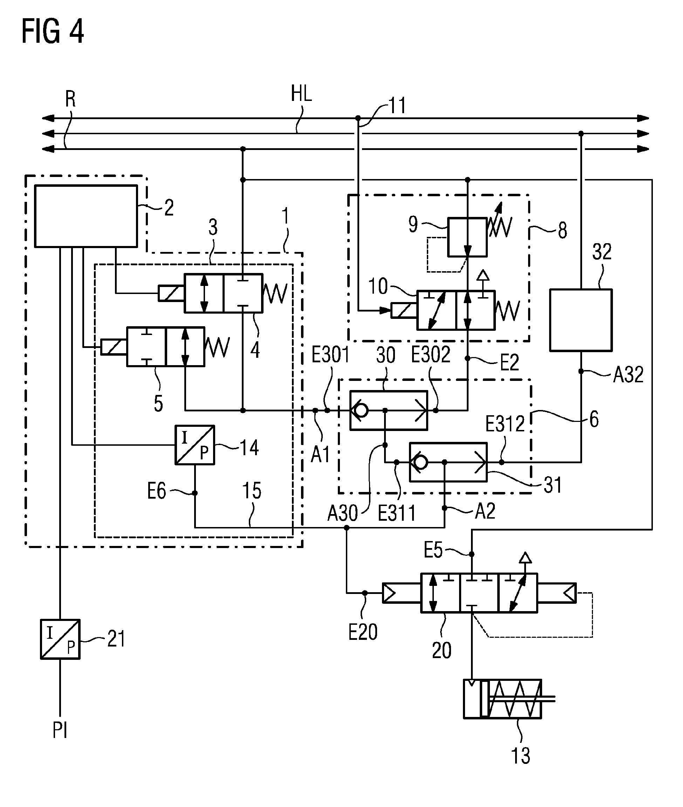

Zum Ausführungsbeispiel nach Figur 4 erübrigen sich im Hinblick auf die Darlegungen zu den Figuren 1 bis 3, insbesondere im Hinblick auf die Beschreibung der Figur 3 umfangreiche Erläuterungen, weil sich die in der Figur 4 dargestellte indirekte Bremsanordnung von der nach Figur 3 im Wesentlichen nur dadurch unterscheidet, dass anstelle eines Lastbremsrelaisventils als Steuerventileinrichtung ein Relaisventil, ähnlich dem Relaisventil 20 nach Figur 2, verwendet wird. Der Lastdruck wird bei diesem Ausführungsbeispiel mit einem zusätzlichen Drucksensor 21 entsprechend Figur 2 erfasst.

## Patentansprüche

1. Bremsanordnung eines Schienenfahrzeugs mit
• einer elektrischen Bremseinrichtung (1) mit einer elektronischen Bremssteuerung (2) und mit einem elektro-pneumatischen Regler (3), der einen Drucksensor (14) aufweist,
• einer Notbremseinrichtung (8) mit einem Druckminderer (9) in Reihe mit einer Ventileinrichtung (10),
• einer an einen pneumatischen Ausgang (A1) der elektrischen Bremseinrichtung (1) und einen pneumatischen Ausgang (A3) der Notbremseinrichtung (8) mit ihren Eingängen (E1, E2) angeschlossenen Wechselventileinrichtung (6), die mit ihrem Ausgang (A2) mit einer einem Bremszylinder (13) vorgeordneten Steuerventileinrichtung (12, 20) verbunden ist,
**dadurch gekennzeichnet, dass**
• die Ventileinrichtung ein nach dem Ruhestromprinzip arbeitendes, elektromagnetisches Notbremsventil (10) ist und
• der Drucksensor (14) des elektro-pneumatischen Reglers (3) an den Ausgang (A2) der Wechselventileinrichtung (6) angeschlossen ist.

2. Bremsanordnung nach Anspruch 1,
**dadurch gekennzeichnet, dass**
• die Wechselventileinrichtung (6) ein erstes und ein zweites Wechselventil (30, 31) enthält,
• die Eingänge (E301, E302) des ersten Wechselventils (30) die Eingänge der Wechselventileinrichtung (6) bilden und der Ausgang (A30) des ersten Wechselventils (30) mit einem Eingang (E311) des zweiten Wechselventils (31) verbunden ist und
• der zweite Eingang (E312) des zweiten Wechselventils (31) an einen Ausgang (A32) eines mit der Hauptluftleitung (HL) der Bremsanordnung verbundenen Steuerventils (32) angeschlossen ist und der Ausgang des zweiten Wechselventils (31) den Ausgang (A2) der Wechselventileinrichtung (6) bildet.

3. Bremsanordnung nach einem der vorangehenden Ansprüche,
**dadurch gekennzeichnet, dass**
• die Wechselventile (6, 30, 31) Doppelrückschlagventile sind.

4. Bremsanordnung nach einem der vorangehenden Ansprüche,
**dadurch gekennzeichnet, dass**
• die Steuerventileinrichtung ein Relaisventil (20) ist.

5. Bremsanordnung nach einem der Ansprüche 1 bis 3,
**dadurch gekennzeichnet, dass**
• die Steuerventileinrichtung ein Lastbremsrelaisventil (12) ist.

6. Bremsanordnung nach einem der Ansprüche 1 bis 5,
**dadurch gekennzeichnet, dass**
• bei aktivierter Notbremseinrichtung (8) der Bremszylinderdruck durch die elektrische Bremseinrichtung (1) ausschließlich erhöhbar ist.

7. Bremsanordnung nach einem der Ansprüche 2 bis 5,
**dadurch gekennzeichnet, dass**
• bei einem Differenzdruck in der Hauptluftleitung (HL) größer als 1,5 bar ein dadurch erzeugter Vorsteuerdruck des Steuerventils (32) durch die elektrische Bremseinrichtung (1) ausschließlich erhöhbar ist.

## Claims

1. Brake arrangement of a rail vehicle, comprising
• an electrical brake device (1) having an electronic brake control (2) and having an electropneumatic regulator (3) which has a pressure sensor (14),
• an emergency brake device (8) having a pressure reducer (9) in series with a valve device (10),
• a shuttle valve device (6), which with its inputs (E1, E2) is connected up to a pneumatic output (A1) of the electrical brake device (1) and to a pneumatic output (A3) of the emergency brake device (8), and with its output (A2) is connected to a control valve device (12, 20) arranged upstream of a brake cylinder (13),
**characterized in that**
• the valve device is an electromagnetic emergency brake valve (10) operating according to the closed-circuit principle, and
• the pressure sensor (14) of the electropneumatic regulator (3) is connected up to the output (A2) of the shuttle valve device (6).

2. Brake arrangement according to Claim 1,
**characterized in that**
• the shuttle valve device (6) contains a first and a second shuttle valve (30, 31),
• the inputs (E301, E302) of the first shuttle valve (30) form the inputs of the shuttle valve device (6) and the output (A30) of the first shuttle valve (30) is connected to an input (E311) of the second shuttle valve (31), and
• the second input (E312) of the second shuttle valve (31) is connected up to an output (A32) of a control valve (32) connected to the main air line (HL) of the brake arrangement and the output of the second shuttle valve (31) forms the output (A2) of the shuttle valve device (6).

3. Brake arrangement according to one of the preceding claims,
**characterized in that**
• the shuttle valves (6, 30, 31) are double check valves.

4. Brake arrangement according to one of the preceding claims,
**characterized in that**
• the control valve device is a relay valve (20).

5. Brake arrangement according to one of Claims 1 to 3,
**characterized in that**
• the control valve device is a load brake relay valve (12).

6. Brake arrangement according to one of Claims 1 to 5,
**characterized in that**
• when the emergency brake device (8) is activated, the brake cylinder pressure can be only increased by the electrical brake device (1).

7. Brake arrangement according to one of Claims 2 to 5,
**characterized in that**
• in the event of a differential pressure in the main air line (HL) greater than 1.5 bar, a thereby generated pilot pressure of the control valve (32) can be only increased by the electrical brake device (1).

## Revendications

1. Agencement de freinage d'un véhicule ferroviaire comprenant :
• un dispositif (1) de freinage électrique ayant une commande (2) électronique de frein et un régleur (3) électropneumatique, qui a un capteur (14) de pression,
• un dispositif (8) de freinage d'urgence ayant un abaisseur (9) de pression en série avec un dispositif (10) de vanne,
• un dispositif (6) de soupape à deux voies, qui est raccordé par ses entrées (E1, E2) à une sortie (A1) pneumatique du dispositif (1) de freinage électrique et à une sortie (A3) pneumatique du dispositif (8) de freinage d'urgence et qui est relié par sa sortie (A2) à un dispositif (12, 20) de vanne de commande monté en amont d'un cylindre (13) de frein,
**caractérisé en ce que**
• le dispositif de vanne est une vanne (10) de frein d'urgence électromagnétique opérant suivant le principe du courant de repos et
• le capteur (14) de pression du régleur (3) électropneumatique est raccordé à la sortie (A2) du dispositif (6) de soupape à deux voies.

2. Agencement de freinage suivant la revendication 1,
**caractérisé en ce que**
• le dispositif (6) de soupape à deux voies comporte une première et une deuxième soupapes (30, 31) à deux voies,
• les entrées (E301, E302) de la première soupape (30) à deux voies forment les entrées du dispositif (6) de soupape à deux voies et la sortie (A30) de la première soupape (30) à deux voies est reliée à une entrée (E311) de la deuxième soupape (31) à deux voies et
• la deuxième entrée (E312) de la deuxième soupape (31) à deux voies est reliée à une sortie (A32) d'une vanne (32) de commande reliée au conduit (HL) d'air principal de l'agencement de freinage et la sortie de la deuxième soupape (31) à deux voies forme la sortie (A2) du dispositif (6) de soupape à deux voies.

3. Agencement de freinage suivant l'une des revendications précédentes,
**caractérisé en ce que**
• les soupapes (6, 30, 31) à deux voies sont des clapets antiretour doubles.

4. Agencement de freinage suivant l'une des revendications précédentes,
**caractérisé en ce que**
• le dispositif de vanne de commande est une vanne (20) relais.

5. Agencement de freinage suivant l'une des revendications 1 à 3,
**caractérisé en ce que**
• le dispositif de vanne de commande est une vanne (12) relais de frein de charge.

6. Agencement de freinage suivant l'une des revendications 1 à 5,
**caractérisé en ce que**
• lorsque le dispositif (8) de freinage d'urgence est activé, la pression du cylindre de frein peut être augmentée exclusivement par le dispositif (1) de freinage électrique.

7. Agencement de freinage suivant l'une des revendications 2 à 5,
**caractérisé en ce que**
• pour une pression différentielle dans le conduit (HL) d'air principal plus grande que 1,5 bar, une pression pilote ainsi produite de la vanne (32) de commande peut être augmentée exclusivement par le dispositif (1) de freinage électrique.
